(19) Europäisches Patentamt / European Patent Office / Office européen des brevets

(11) **EP 4 410 744 A1**

(12) **EUROPEAN PATENT APPLICATION**
published in accordance with Art. 153(4) EPC

(43) Date of publication:
**07.08.2024 Bulletin 2024/32**

(21) Application number: **22872744.2**

(22) Date of filing: **09.09.2022**

(51) International Patent Classification (IPC):
**C01F 5/08** (2006.01)          **C08K 3/22** (2006.01)
**C08L 21/00** (2006.01)

(52) Cooperative Patent Classification (CPC):
**C01F 5/08; C08K 3/22; C08L 21/00**

(86) International application number:
**PCT/JP2022/033919**

(87) International publication number:
**WO 2023/047990 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.09.2021 JP 2021157106**

(71) Applicant: Ube Material Industries, Ltd.
**Ube-shi**
**Yamaguchi 755-8510 (JP)**

(72) Inventors:
• **NAKAGAWA, Masamichi**
  **Ube-shi, Yamaguchi 755-8510 (JP)**
• **FUJIKAWA, Isamu**
  **Ube-shi, Yamaguchi 755-8510 (JP)**
• **HAMAOKA, Takashi**
  **Ube-shi, Yamaguchi 755-8510 (JP)**
• **HIMOTO, Takeshi**
  **Ube-shi, Yamaguchi 755-8510 (JP)**
• **YAMAGUCHI, Seiji**
  **Ube-shi, Yamaguchi 755-8510 (JP)**
• **WATANABE, Kunio**
  **Ube-shi, Yamaguchi 755-8510 (JP)**

(74) Representative: **Vossius & Partner**
**Patentanwälte Rechtsanwälte mbB**
**Siebertstrasse 3**
**81675 München (DE)**

(54) **MAGNESIUM OXIDE POWDER, VULCANIZER COMPOSITION FOR RUBBER, RUBBER COMPOSITION, METHOD FOR PRODUCING MAGNESIUM OXIDE POWDER**

(57)     There is provided a magnesium oxide powder, where $D_{50}$ is 10 µm or less, $D_{50}$ being a particle size at which a cumulative size based on a volume-based cumulative particle size distribution curve by sieving test is 50%, a ratio $D_{90}/D_{10}$ is 10 or less, $D_{90}$ and $D_{10}$ being particle sizes at which cumulative sizes based on the volume-based cumulative particle size distribution curve by sieving test are 90% and 10%, respectively, and a citric acid activity is in a range of 500 seconds or more and 2,500 seconds or less.

**Description**

[Technical Field]

The present invention relates to a magnesium oxide powder, a vulcanizing agent composition for rubber, a rubber composition, and a production method for a magnesium oxide powder.
Priority is claimed on Japanese Patent Application No. 2021-157106, filed September 27, 2021, the content of which is incorporated herein by reference.

[Background Art]

An additive for a rubber composition is known as one of use applications of a magnesium oxide powder. For example, Patent Document 1 describes that a magnesium oxide powder is used as a rubber additive. In Example of Patent Document 1, a magnesium oxide powder of a reagent grade is used as the magnesium oxide powder. Patent Document 2 describes that a low-activity magnesium oxide powder having a BET specific surface area of 0.1 to 1.0 $m^2/g$ is used as an additive for decreasing the brittle temperature, while maintaining the air permeation prevention performance of the rubber composition, and improving crack resistance.

[Citation List]

[Patent Document]

[Patent Document 1]
Japanese Unexamined Patent Application, First Publication No. 2019-044137
[Patent Document 2]
Japanese Unexamined Patent Application, First Publication No. 2015-052031

[Summary of Invention]

[Technical Problem]

The magnesium oxide powder of the reagent grade used in Patent Document 1 generally has a high activity and is highly effective in accelerating vulcanization. The tensile strength of the rubber composition is improved by accelerating vulcanization. Therefore, it is preferable that vulcanization is accelerated. However, a magnesium oxide powder having high activity has high reactivity with moisture and tends to have low hydration resistance. A magnesium hydroxide powder has a low density as compared with the magnesium oxide powder, and thus in a rubber composition containing a magnesium oxide powder of a reagent grade, there is a risk that the magnesium oxide powder expands by being hydrated and the shape thereof changes. On the other hand, the low-activity magnesium oxide powder described in Patent Document 2 has a low effect of accelerating vulcanization, and thus it is difficult to be used as a vulcanization acceleration aid. In particular, a rubber composition that is used for a tire is required to have chemical stability such as hydration resistance. Further, a rubber composition that is used in a surface layer of a tire is required to have a low surface roughness and have an appearance with an excellent texture, for example, glossiness.
The present invention has been made in consideration of the above-described circumstances, and an object thereof is to provide a magnesium oxide powder that has a high effect of accelerating rubber vulcanization, has high hydration resistance, and has an excellent texture in a case of being blended into a rubber composition, as well as a vulcanizing agent composition for rubber and a production method for the magnesium oxide powder. In addition, another object of the present invention is to provide a rubber composition that has high tensile strength and high hydration resistance, has low surface roughness, and has an excellent appearance, for example, glossiness.

[Solution to Problem]

As a result of diligent studies in order to solve the above-described problems, the inventors of the present invention found that in a case of adjusting the particle size distribution and citric acid activity of the magnesium oxide powder to be in a predetermined range, it is possible to improve the effect of accelerating rubber vulcanization while suppressing the reactivity with moisture. In addition, it was confirmed that in a case of blending, into a rubber composition, the magnesium oxide powder of which the particle size distribution and the citric acid activity have been adjusted, it is possible to obtain a rubber composition that has high tensile strength, has high hydration resistance, has low surface roughness, and has high glossiness, whereby the present invention was completed. As a result, the present invention has the following configurations.

[1] A magnesium oxide powder, wherein $D_{50}$ is 10 $\mu$m or less, $D_{50}$ being a particle size at which a cumulative size based on a volume-based cumulative particle size distribution curve by sieving test is 50%, a ratio $D_{90}/D_{10}$ is 10 or less, $D_{90}$ and $D_{10}$ being particle sizes at which cumulative sizes based on the volume-based cumulative particle size distribution curve by sieving test are 90% and 10%, respectively, and a citric acid activity is in a range of 500 seconds or more and 2,500 seconds or less, the citric acid activity being an elapsed time measured by a citric acid activity measuring method including steps of: adjusting a temperature of a mixed solution to 30°C $\pm$ 0.5°C, the mixed solution containing 100 mL of a citric acid aqueous solution of a concentration of 0.13 mol/L, and 2 mL of a phenolphthalein solution of a concentration of 1%; adding 2 gm of magnesium oxide powder to the mixed solution after the step of adjusting; stirring the mixed solution 10 seconds after the step of adding; and obtaining the elapsed time obtaining the elapsed time from the step of adding to a time the mixed solution turns to pink.

[2] The magnesium oxide powder according to [1], in which the $D_{50}$ is in a range of 3 $\mu$m or more and 10 $\mu$m or less.

[3] The magnesium oxide powder according to [1] or [2], in which the $D_{90}$ is 50 $\mu$m or less.

[4] The magnesium oxide powder according to any one of [1] to [3], in which a BET specific surface area is 2.0 m²/g or less.

[5] The magnesium oxide powder according to any one of [1] to [4], in which a magnesium oxide content rate is 90% by mass or more.

[6] The magnesium oxide powder according to any one of [1] to [5], in which the magnesium oxide powder is for a rubber vulcanization acceleration aid.

[7] A vulcanizing agent composition for rubber, containing a vulcanizing agent, a rubber vulcanization accelerating agent, and the magnesium oxide powder according to [6].

[8] A rubber composition containing a rubber component, a rubber vulcanizing agent, a rubber vulcanization accelerating agent, and the magnesium oxide powder according to [6].

[9] A method for producing a magnesium oxide powder, the method including the steps of: producing magnesium oxide by firing a magnesium compound at a temperature of 1,200°C or higher and 2,500°C or lower; and obtaining a magnesium oxide powder having $D_{90}$ is 50 $\mu$m or less by carrying out any one or both of pulverization and classification of the magnesium oxide, $D_{90}$ being a particle size at which a cumulative size based on a volume-based cumulative particle size distribution curve by sieving test is 90%, wherein a BET specific surface area of the magnesium oxide powder is 2.0 m²/g or less, and a citric acid activity of the magnesium oxide powder is in a range of 500 seconds or more and 2,500 seconds or less, the citric acid activity being measured by the measuring method described above.

[Advantageous Effects of Invention]

According to the present invention, it is possible to provide a magnesium oxide powder that has a high tensile strength due to the acceleration of rubber vulcanization, has high hydration resistance, and has an excellent texture in a case of being blended into a rubber composition, as well as a vulcanizing agent composition for rubber and a production method for the magnesium oxide powder. In addition, according to the present invention, it is also possible to provide a rubber composition that has high tensile strength and high hydration resistance, has low surface roughness, and has an excellent appearance, for example, glossiness.

[Description of Embodiments]

Hereinafter, descriptions will be made regarding embodiments of a magnesium oxide powder according to the present invention, the production method therefor, a vulcanizing agent composition for rubber, which uses the magnesium oxide powder, and a rubber composition.

In a magnesium oxide powder according to the present embodiment, $D_{50}$ (median diameter) at which a cumulative size based on a volume-based cumulative particle size distribution curve by sieving test is 50% is set to 10 $\mu$m or less. In addition, in the magnesium oxide powder, a ratio $D_{90}/D_{10}$ is set to 10 or less, $D_{90}$ and $D_{10}$ being particle sizes at which cumulative sizes based on the volume-based cumulative particle size distribution curve by sieving test are 90% and 10%, respectively. $D_{90}/D_{10}$ is an indicator of the width of the particle size distribution of the magnesium oxide powder. The smaller the $D_{90}/D_{10}$ is, the narrower and sharper the particle size distribution is. In a case of adding a magnesium oxide powder, which is fine with $D_{50}$ of 10 $\mu$m or less and has a narrow particle size distribution with a $D_{90}/D_{10}$ of 10 or less, to a rubber composition, it is possible to obtain a rubber composition that provides a low surface roughness Rz and high glossiness. $D_{50}$ is preferably in a range of 3 $\mu$m or more and 10 $\mu$m or less. $D_{50}$ may be 3.5 $\mu$m or more and

9 $\mu$m or less or may be 4 $\mu$m or more and 8 $\mu$m or less. $D_{90}/D_{10}$ is preferably in a range of 2 or more and 8 or less. $D_{90}/D_{10}$ may be 2 or more and 7 or less or may be 2 or more and 6 or less. $D_{90}$ is preferably 50 $\mu$m or less and more preferably in a range of 11 $\mu$m or more and 30 $\mu$m or less. In addition, $D_{90}$ is preferably 3.0 times or less and more preferably in a range of 1.3 times or more and 2.5 times or less with respect to $D_{50}$. $D_{10}$ is preferably 0.5 $\mu$m or more and more preferably in a range of 2 $\mu$m or more and 9 $\mu$m or less. In addition, $D_{10}$ is preferably 1/5.0 times or more and more preferably in a range of 1/4.0 times or more and 1/1.3 times or less with respect to $D_{50}$.

The volume-based cumulative particle size distribution curve by sieving test can be measured according to a laser diffraction/scattering method.

In the magnesium oxide powder according to the present embodiment, the citric acid activity (CAA) measured by the following method is set in a range of 500 seconds or more and 2,500 seconds or less. The CAA (the time taken until the color of the mixed solution changes to pink after adding the magnesium oxide powder) becomes short in a case where the magnesium oxide powder easily reacts with citric acid, and it becomes long in a case where the magnesium oxide powder is difficult to react with citric acid. That is, as the activity of the magnesium oxide powder increases, the CAA becomes short, and as the activity of the magnesium oxide powder decreases, the CAA becomes long. In a case where the CAA becomes too short, the reactivity of the magnesium oxide powder to moisture also becomes too high, and thus there is a risk that the hydration resistance decreases. On the other hand, in a case where the CAA becomes too long, there is a risk that the action of accelerating the vulcanization of the magnesium oxide powder decreases. Therefore, in the present embodiment, the CAA of the magnesium oxide powder is set in a range of 500 seconds to 2,500 seconds. The CAA of the magnesium oxide powder may be in a range of 1,000 seconds or more and 2,500 seconds or less, or it may be in a range of 1,000 seconds or more and 2,000 seconds or less. A measuring method for CAA will be described later.

In the magnesium oxide powder according to the present embodiment, the BET specific surface area may be 2.0 m$^2$/g or less. The BET specific surface area is an indicator of the activity of the magnesium oxide powder. In a case where the BET specific surface area is 2.0 m$^2$/g or less, the hydration reaction of the magnesium oxide powder is difficult to occur, and the hydration resistance is improved. From the viewpoint of accelerating rubber vulcanization, the BET specific surface area of the magnesium oxide powder is preferably 0.3 m$^2$/g or more and particularly preferably 0.5 m$^2$/g or more.

The BET specific surface area can be measured according to the BET one-point method.

In the magnesium oxide powder according to the present embodiment, the content rate of the magnesium oxide may be 90% by mass or more. In a case where the content rate of the magnesium oxide is as high as 90% by mass or more, the action of accelerating rubber vulcanization is improved. The content rate of the magnesium oxide is preferably 95% by mass or more and particularly preferably 97% by mass or more.

Although not particularly limited, the content rate of the magnesium oxide in the magnesium oxide powder according to the present embodiment may be 99.9% by mass or less.

In the magnesium oxide powder according to the present embodiment, which is configured as above, $D_{50}$ is 10 $\mu$m or less, $D_{90}/D_{10}$ is 10 or less, and a citric acid activity measured by the following method is in a range of 500 seconds or more and 2,500 seconds or less. Therefore, the magnesium oxide powder accelerates rubber vulcanization, has high tensile strength, and has high hydration resistance in a case of being blended into a rubber composition. In addition, in a case of being blended into a rubber composition, the rubber composition has a small surface roughness Rz, has high glossiness, and exhibits an appearance with an excellent texture.

In the magnesium oxide powder according to the present embodiment, in a case where $D_{50}$ is in a range of 3 $\mu$m or more and 10 $\mu$m or less, the magnesium oxide particles become finer, and thus the action of accelerating rubber vulcanization is further improved. In addition, in a case where $D_{90}$ is 50 $\mu$m or less, there are fewer coarse magnesium oxide particles. Therefore, in a case of being blended into a rubber composition, the rubber composition has a smaller surface roughness Rz, has higher glossiness, and has an excellent texture.

In the magnesium oxide powder according to the present embodiment, in a case where the BET specific surface area is 2.0 m$^2$/g or less, the hydration reaction is difficult to occur, and thus hydration resistance becomes higher in a case where the magnesium oxide powder is blended into a rubber composition. Further, in a case where the magnesium oxide content is 90% by mass or more, the action of accelerating rubber vulcanization is further improved.

Next, a production method for a magnesium oxide powder according to the present embodiment will be described.

The production method for a magnesium oxide powder according to the present embodiment includes (a) a firing step and (b) a particle size adjustment step.

(a) Firing step

In the firing step, a magnesium compound is sintered at a temperature of 1,200°C or higher and 2,500°C or lower to generate magnesium oxide.

The magnesium compound is a compound that generates magnesium oxide upon firing. As the magnesium compound, magnesium hydroxide or magnesium carbonate can be used.

The firing temperature is preferably in a range of 1,500°C or more and 2,000°C or less and particularly preferably in a range of 1,600°C or more and 2,000°C or less.

As firing devices, various devices that are used for producing magnesium oxide, such as an electric furnace and a rotary kiln, can be used.

It is noted that the magnesium oxide that is obtained in the firing step may have a particulate shape or may have a powdery shape. In addition, the citric acid activity (CAA) of the magnesium oxide that is obtained in the firing step may be more than 2,500 seconds.

(b) Particle size adjustment step

In the particle size adjustment step, the magnesium oxide obtained in the firing step described above is subjected to any one or both of pulverization and classification to obtain a magnesium oxide powder in which $D_{90}$ at which a cumulative size based on a volume-based cumulative particle size distribution curve by sieving test is 90% is 50 $\mu$m or less.

As a method of pulverization, it is possible to use a pulverizing method that uses a pulverizer such as a hammer type pulverizer, an impact type pulverizer, a roll type pulverizer, a stone mill type pulverizer, a vibration type pulverizer, or an airflow type pulverizer.

As the pulverization device, one type of pulverization device may be used alone, or two or more types of pulverization devices may be used in combination.

A method of classification is not particularly limited, and it is possible to use a classification method that uses a classification device such as a vibrating sieve machine, an airflow type classifier, or a cyclone type classifier.

As the classification device, one type of classification device may be used alone, or two or more types of pulverization devices may be used in combination.

In a case where the citric acid activity of the magnesium oxide obtained in the calcination step described above is low, it is preferable to carry out pulverization in the particle size adjustment step, more preferable to carry out both pulverization and classification, and particularly preferable to carry out classification after pulverization. In a case of pulverizing magnesium oxide to expose the new surface of the crushed magnesium oxide, the citric acid activity of the magnesium oxide powder to be obtained increases, and the action of accelerating rubber vulcanization increases.

In the above manner, it is possible to obtain a magnesium oxide powder in which a BET specific surface area is 2.0 $m^2$/g or less, and a citric acid activity measured by the following method is in a range of 500 seconds or more and 2,500 seconds or less.

According to the production method for a magnesium oxide powder according to the present embodiment, which is configured as above, the magnesium compound is sintered at a temperature of 1,200°C or more and 2,500°C or less in the (a) firing step, and thus a hydration reaction is difficult to occur in the magnesium oxide powder to be obtained. As a result, in a case of being blended into a rubber composition, hydration resistance becomes higher.

In addition, any one or both of pulverization and classification of the magnesium oxide is carried out in the (b) particle size adjustment step so that $D_{90}$ at which a cumulative size based on a volume-based cumulative particle size distribution curve by sieving test is 90% is set to 50 $\mu$m or less. Therefore, the magnesium oxide powder to be obtained is fine, has a high effect of accelerating rubber vulcanization, and has an excellent texture in a case of being blended into a rubber composition.

The magnesium oxide powder according to the present embodiment can be used as a rubber vulcanization acceleration aid. In a case of using the magnesium oxide powder according to the present embodiment, it is possible to obtain a rubber composition in which rubber vulcanization has progressed.

As a production method for a rubber composition containing the magnesium oxide powder, it is possible to use, for example, (1) a method of carrying out vulcanization by preparing a blend containing rubber and magnesium oxide and mixing this blend with a vulcanizing agent and a vulcanization accelerating agent, (2) a method of carrying out vulcanization by preparing a vulcanizing agent composition for rubber, which contains a vulcanizing agent, a rubber vulcanization accelerating agent, and a magnesium oxide powder, and mixing the rubber and the vulcanizing agent composition for rubber, or (3) a method of carrying out vulcanization by preparing a blend containing rubber, a vulcanizing agent, and a vulcanization accelerating agent, and mixing this blend with magnesium oxide.

As rubber, it is possible to use butadiene rubber, styrene-butadiene rubber, chloroprene rubber, acrylic rubber, nitrile rubber, isoprene rubber, urethane rubber, ethylene propylene rubber, chlorosulfonated polyethylene, epichlorohydrin rubber, silicone rubber, fluororubber, polyisobutylene rubber, or the like. One kind of these rubbers may be used alone or two or more kinds thereof may be used in combination.

As a vulcanizing agent, it is possible to use a vulcanizing agent that is generally used in a case of vulcanizing rubber, such as an organic peroxide, a phenolic resin, a sulfur-based compound, a hydrosilylation-based compound, an amino resin, a quinone or a derivative thereof, an amine-based compound, an azo-based compound, an epoxy-based compound, or an isocyanate-based compound. As a vulcanization accelerating agent, vulcanization accelerating agents that are commonly used for rubber vulcanization, such as a sulfenamide vulcanization accelerating agent, a thiuram-based vulcanization accelerating agent, a thiazole-based vulcanization accelerating agent, a thiourea-based vulcanization accelerating agent, a guanidine-based vulcanization accelerating agent, and a dithiocarbamate-based vulcanization accelerating agent, can be used alone or can used by being appropriately mixed. As a vulcanization acceleration aid, it is possible to use a fatty acid such as acetyl acid, propionic acid, butanoic acid, stearic acid, acrylic acid, or maleic acid, or a magnesium oxide powder.

The vulcanizing agent composition for rubber according to the present embodiment contains a vulcanizing agent, a rubber vulcanization accelerating agent, and the magnesium oxide powder described above. The vulcanizing agent composition for rubber may contain a sulfur compound in a range of 5% by mass or more and 20% by mass or less in a case of being used as a vulcanizing agent, a vulcanization accelerating agent in a range of 5% by mass or more and 60% by mass or less, and a magnesium oxide powder in a range of 5% by mass or more and 60% by mass or less. In addition, the vulcanizing agent composition for rubber may further contain the above-described fatty acid other than the magnesium oxide powder in a range of 5% by mass or more and 20% by mass or less.

Since the vulcanizing agent composition for rubber according to the present embodiment, which is configured as above, contains the magnesium oxide powder described above, it has a high effect of accelerating rubber vulcanization, has high hydration resistance in a case of being blended into a rubber composition, and has an excellent texture. Therefore, in a case of using the vulcanizing agent composition for rubber according to the present embodiment, vulcanization progresses sufficiently, and thus it is possible to obtain a rubber composition that has high tensile strength and high hydration resistance, has low surface roughness, and has an excellent appearance, for example, glossiness.

A rubber composition according to the present embodiment contains a rubber component, a rubber vulcanizing agent, a rubber vulcanization accelerating agent, and the magnesium oxide powder according to Claim 6. In a case of using a sulfur compound, the content of the vulcanizing agent with respect to 100 parts by mass of the rubber component may be in a range of 0.1 parts by mass to 10 parts by mass, the content of the vulcanization accelerating agent may be 0.1 parts by mass to 20 parts by mass, and the content of the magnesium oxide powder may be in a range of 0.1 parts by mass or more and 20 parts by mass or less.

The rubber composition may further contain various additives that are used in a rubber composition, such as a filler, a dispersant for a filler, a rubber softener, and an anti-aging agent. As a filler, it is possible to use silica, talc, calcium carbonate, magnesium carbonate, barium sulfate, calcium sulfate, calcium sulfite, calcium phosphate, calcium hydroxide, magnesium hydroxide, aluminum hydroxide, aluminum oxide, titanium oxide, iron oxide, zinc oxide, diatomaceous earth, dolomite, mica, calcium silicate, bentonite, carbon black, or the like. As a dispersant for a filler, it is possible to use a coupling agent such as a silane coupling agent. As a rubber softener, it is possible to use, for example, naphthene-based oil or raffinic oil.

Since the rubber composition according to the present embodiment, which is configured as above, contains the magnesium oxide powder described above, and vulcanization is sufficiently accelerated, it has high tensile strength and high hydration resistance, has low surface roughness, and has an excellent appearance, for example, glossiness.

As described above, the embodiments of the present invention have been described. However, the present invention is not limited thereto and can be appropriately modified without departing from the technical idea of the invention.

[Examples]

Hereinafter, the present invention will be specifically described based on Examples; however, these are not intended to limit the object of the present invention.

First, the evaluation items and measuring methods for the magnesium oxide powder and the rubber composition produced in the present example are described below.

[Evaluation of magnesium oxide powder]

(Measurement of particle size distribution)

30 mL of ethanol (manufactured by Kishida Chemical Co., Ltd., 1st grade ethanol) and 1.5 g of a magnesium oxide powder are added to a 50 mL beaker, and a dispersion treatment is carried out with an ultrasonic homogenizer (manufactured by NISSEI Corporation, model: US-150T, 150 W) for 2 minutes to obtain a magnesium oxide dispersion liquid. The obtained magnesium oxide dispersion liquid is subjected to a laser diffraction/scattering method (manufactured by MicrotracBEL Corp, particle size distribution measuring device, model: MT3300EX) to measure the particle size ($D_{10}$, $D_{50}$, $D_{90}$).

(Measurement of citric acid activity (CAA))

In a 200 mL beaker, 100 mL of an aqueous solution of citric acid having a concentration of 0.13 mol/L is mixed with 2 mL of a solution of phenolphthalein having a concentration of 1% to obtain a mixed solution. The temperature of the obtained mixed solution is adjusted to 30°C $\pm$ 0.5°C. 2.00 g of a magnesium oxide powder is added to the mixed solution of which the temperature has been adjusted. 10 seconds after adding the magnesium oxide powder, the mixed solution is started to be stirred with a stirrer (rotation speed: 400 rpm), and the time taken until the color of the mixed solution changes to pink after adding the magnesium oxide powder to the mixed solution is measured. This measured time is defined as the citric acid activity.

(Measurement of BET specific surface area)

3 g of a magnesium oxide powder is put into a measurement cell and degassed at 200°C for 10 minutes. The degassed measurement cell is mounted on a fully automatic specific surface area measuring device (manufactured by MOUNTECH Co., Ltd., Macsorb HM model-1200) to carry out the measurement of the specific surface area according to the BET one-point method using a nitrogen-helium mixed gas (nitrogen: 30% by volume, helium: 70% by volume).

(Measurement of magnesium oxide (MgO) content rate)

The content rates of CaO, $SiO_2$, $B_2O_3$, $Fe_2O_3$, and $Al_2O_3$ are measured in accordance with JIS R2212-4:2006 (Methods for chemical analysis of refractory products - Part 4: Magnesite and/or dolomite refractories). The content rate of MgO is defined as a value obtained by subtracting the total of the content rates of CaO, $SiO_2$, $B_2O_3$, $Fe_2O_3$, and $Al_2O_3$ from 100% by mass.

[Evaluation of rubber composition]

(Measurement of tensile strength (M100))

Measurement is carried out in accordance with JIS K 6251:2017 (Rubber, vulcanized or thermoplastic - Determination of tensile stress-strain properties). A rubber composition is punched out into a dumbbell-shaped No. 3 form to obtain a test piece having a dumbbell-shaped No. 3 form. Two marked lines are drawn at a spacing of 20 mm in the center of the obtained test piece having a dumbbell-shaped No. 3 form, the width and thickness at a total of three points on the marked line and in the center between the marked lines are measured with a caliper, and the respective median values are defined as the width and the thickness of the test piece having a dumbbell-shaped No. 3 form. The test piece having a dumbbell-shaped No. 3 form is attached to a universal tester (manufactured by Shimadzu Corporation, model: AGS-5kNX), and the stress and the elongation of the test piece are measured under conditions of a test temperature of 23°C and a tensile speed of 500 mm/min. The tensile strength (M100) (Mpa) was calculated according to the following expression from the stress (N) at a 100% elongation of the test piece having a dumbbell-shaped No. 3 form and the cross-sectional area ($mm^2$) calculated from the width and thickness of the test piece.

tensile strength (M100) (Mpa) = stress at 100% elongation (N)/cross-sectional area ($mm^2$)

(Measurement of weight increase rate)

A weight (W1) of a test piece having a dumbbell-shaped No. 3 form, which is obtained in the same manner as in the measurement of the tensile strength (M100) described above, is measured. The test piece having a dumbbell-shaped No. 3 form which had been subjected to the weight measurement was put into a constant temperature and humidity chamber (manufactured by Yamato Scientific Co., Ltd., model: IW222) set to a temperature of 85°C and a humidity of 85% and allowed to stand for 48 hours. After being allowed to stand, the test piece having a dumbbell-shaped No. 3 form is taken out from the constant temperature and humidity chamber to be cooled to room temperature in a desiccator, and then a weight (W2) thereof is measured. The weight increase rate (% by mass) is calculated from the measured weights W1 and W2 according to the following expression.

$$\text{Expression: weight increase rate (\% by mass)} = (W2 - W1)/W1 \times 100$$

(Measurement of surface roughness Rz (maximum height roughness))

Two marked lines are drawn at a spacing of 20 mm in the center of a test piece having a dumbbell-shaped No. 3 form, which is obtained in the same manner as in the measurement of the tensile strength (M100) described above. Next, using a laser microscope model VK-9700 (manufactured by KEYENCE CORPORATION), measurement is carried out to obtain the roughness between the marked lines (20mm) at the center of a test piece having a dumbbell-shaped No.3 form. The sum of the highest portion (maximum peak height: Rp) and the deepest portion (maximum valley depth: Rv) at the reference length of the roughness curve is defined as the surface roughness (Rp + Rv = Rz) ($\mu$m).

(Measurement of glossiness)

Using a handy gloss meter (manufactured by HORIBA, Ltd., gloss checker, model: IG-331), the glossiness of a test piece having a dumbbell-shaped No. 3 form, which is obtained in the same manner as in the measurement of the tensile strength (M100) described above, is measured at measurement angles of 20° and 60° in accordance with JIS Z 8741:1997 (Specular glossiness - Methods of measurement).

[Example 1]

(1) Production of magnesium oxide powder

Magnesium hydroxide generated by a reaction between milk of lime (calcium hydroxide) and a magnesium salt in seawater was prepared. This magnesium hydroxide was sintered at 1,700°C in a rotary kiln. The obtained magnesium oxide sintered body (magnesia clinker) was pulverized with a multiple impact pulverizer (manufactured by EARTHTECHNICA Co., Ltd., Super Mill), and further, the fine particle portion of the powder collected with a cyclone was subjected to a removal of coarse particles by using a centrifugal airflow type classifier (manufactured by Hosokawa Micron Corporation, Micron Separator, model: MS-3) having a classification point of 20 $\mu$m, thereby obtaining a magnesium oxide powder A-1 according to Example 1.

(2) Production of rubber composition

The blending substances shown in Table 1 below were prepared so that the blending amounts (parts by mass) thereof were as shown in Table 1 below. Each of BR, SBR, silica, naphthene oil, a silane coupling agent, stearic acid, an anti-aging agent, and the magnesium oxide powder A-1 obtained in the section of (1) Production of magnesium oxide powder described above was put into a closed type kneader (manufactured by Brabender Technologie, Lab-Station) so that the blending amount thereof was as shown in Table 1, and kneading was carried out at 90°C for 5 minutes to obtain a primary blend. The obtained primary blend was put into a twin-roll kneader (KANSAI ROLL Co., Ltd., 6-inch test roll) and further kneaded at 65°C for 1 minute. Next, each of a vulcanization accelerating agent A, a vulcanization accelerating agent B, and sulfur were added to the primary blend so that the amount thereof was as shown in Table 1, and kneading was carried out for 3 minutes with a twin-roll kneader to obtain a secondary blend. The obtained secondary blend was aged for 20 hours. The aged secondary blend was put into a predetermined mold and vulcanized at 160°C for 20 minutes to obtain rubber composition A-1.

[Table 1]

| Blending agent | Blending amount (part by mass) |
|---|---|
| Butadiene rubber (BR) (manufactured by UBE Corporation, BR150) | 30 |
| Styrene-butadiene rubber (SBR) (manufactured by Zeon Corporation, Nipol1502) | 70 |
| Silica (manufactured by Tosoh Silica Corporation, Nipsil AQ) | 75 |
| Naphthene oil (manufactured by Starry Oil Corporation, VivaTec500) | 21.5 |
| Silane coupling agent (manufactured by EVONIK JAPAN CO., LTD., Si69) | 6.0 |
| Stearic acid (manufactured by KISHIDA CHEMICAL Co., Ltd., stearic acid, first grade) | 1.0 |
| Anti-aging agent (manufactured by OUCHI SHINKO CHEMICAL INDUSTRIAL CO., LTD., NOCRAC 6C) | 1.0 |

(continued)

| Blending agent | Blending amount (part by mass) |
|---|---|
| Magnesium oxide powder A-1 | 3.0 |
| Vulcanization accelerating agent A (manufactured by OUCHI SHINKO CHEMICAL INDUSTRIAL CO., LTD., NOCCELER CZ) | 1.7 |
| Vulcanization accelerating agent B (manufactured by OUCHI SHINKO CHEMICAL INDUSTRIAL CO., LTD., NOCCELER D) | 2.0 |
| Sulfur (manufactured by KISHIDA CHEMICAL Co., Ltd., sulfur powder) | 1.4 |

[Comparative Example 1]

A magnesium oxide powder B-1 was produced in the same manner as in Example 1, except that in the section of (1) Production of magnesium oxide powder, the classification point of the centrifugal airflow type classifier was set to 150 $\mu$m. Then, a rubber composition was produced in the same manner as in Example 1, except that in the section of (2) Production of rubber composition, the magnesium oxide powder B-1 was used instead of the magnesium oxide powder A-1.

[Comparative Example 2]

The magnesium hydroxide produced in the section of (1) Production of magnesium oxide powder, in the same manner as in Example 1 was calcined at 1,000°C in a rotary kiln to produce a magnesium oxide powder B-2. Then, a rubber composition B-2 was produced in the same manner as in Example 1, except that in the section of (2) Production of rubber composition, the magnesium oxide powder B-2 was used instead of the magnesium oxide powder A-1.

[Evaluation]

Table 2 below shows the measurement results of the particle size distribution, CAA, BET specific surface area, and MgO content rate of each of the magnesium oxide powders obtained in Example 1 and Comparative Examples 1 and 2. In addition, Table 3 below shows the tensile strength (M100), weight increase rate due to moisture, surface roughness Rz, and glossiness of each of the rubber compositions obtained in Example 1 and Comparative Examples 1 and 2.

[Table 2]

| | No. | Particle size distribution | | | | CAA (second) | BET specific surface area ($m^2$/g) | MgO content rate (% by mass) |
|---|---|---|---|---|---|---|---|---|
| | | $D_{10}$ ($\mu$m) | $D_{50}$ ($\mu$m) | $D_{90}$ ($\mu$m) | $D_{90}/D_{10}$ (-) | | | |
| Example 1 | A-1 | 4.3 | 7.3 | 12.7 | 2.9 | 1511 | 0.8 | 99.3 |
| Comparative Example 1 | B-1 | 4.9 | 14.8 | 53.7 | 10.9 | 2800 | 0.7 | 99.2 |
| Comparative Example 2 | B-2 | 2.7 | 4.3 | 6.8 | 2.6 | 162 | 6.5 | 97.5 |

[Table 3]

| | No. | Tensile strength (M100) (MPa) | Weight increase rate due to moisture (% by mass) | Surface roughness Rz ($\mu$m) | Glossiness (%) | |
|---|---|---|---|---|---|---|
| | | | | | 20° | 60° |
| Example 1 | A-1 | 3.2 | 0.01 | 13 | 24 | 66 |
| Comparative Example 1 | B-1 | 2.9 | Below lower limit of detection | 24 | 13 | 50 |

(continued)

| | No. | Tensile strength (M100) (MPa) | Weight increase rate due to moisture (% by mass) | Surface roughness Rz ($\mu$m) | Glossiness (%) | |
|---|---|---|---|---|---|---|
| | | | | | 20° | 60° |
| Comparative Example 2 | B-2 | 3.2 | 0. 23 | 7.9 | 29 | $\geq$ 70 |

From the results in Table 2 and Table 3, it has been confirmed that the rubber composition containing the magnesium oxide powder of Example 1, in which the particle size distribution and the citric acid activity are in the range according to the present invention, has high tensile strength and high hydration resistance, has a low surface roughness Rz, and has an improved glossiness.

On the other hand, it has been confirmed that in the rubber composition containing the magnesium oxide powder of Comparative Example 1, in which $D_{90}/D_{10}$ in the particle size distribution is larger than the range according to the present invention and the citric acid activity is lower than the range according to the present invention, the tensile strength decreases, the surface roughness Rz increases, and the glossiness decreases. The reason why the tensile strength has decreased is that the citric acid activity is low as compared with that of the magnesium oxide powder of Example 1, and the action of accelerating vulcanization has decreased. In addition, the reason why the surface roughness Rz has increased and the glossiness has decreased is that $D_{90}/D_{10}$ in the particle size distribution is large and the width of the particle size distribution has become wide. It has been confirmed that the rubber composition containing the magnesium oxide powder of Comparative Example 2, in which the citric acid activity is higher than the range according to the present invention, has decreased hydration resistance although $D_{90}/D_{10}$ in the particle size distribution is in the range according to the present invention. This is because, similarly to the citric acid activity, the reactivity with moisture has become too high.

[Industrial Applicability]

It is possible to provide a magnesium oxide powder that has a high tensile strength due to the acceleration of rubber vulcanization, has high hydration resistance, and has an excellent texture in a case of being blended into a rubber composition, as well as a vulcanizing agent composition for rubber and a production method for the magnesium oxide powder. It is also possible to provide a rubber composition that has high tensile strength and high hydration resistance, has low surface roughness, and has an excellent appearance, for example, glossiness.

**Claims**

1. A magnesium oxide powder,

   wherein $D_{50}$ is 10 $\mu$m or less, $D_{50}$ being a particle size at which a cumulative size based on a volume-based cumulative particle size distribution curve by sieving test is 50%,
   a ratio $D_{90}/D_{10}$ is 10 or less, $D_{90}$ and $D_{10}$ being particle sizes at which cumulative sizes based on the volume-based cumulative particle size distribution curve by sieving test are 90% and 10%, respectively, and
   a citric acid activity is in a range of 500 seconds or more and 2,500 seconds or less, the citric acid activity being an elapsed time measured by a citric acid activity measuring method including steps of: adjusting a temperature of a mixed solution to 30°C $\pm$ 0.5°C, the mixed solution containing 100 mL of a citric acid aqueous solution of a concentration of 0.13 mol/L, and 2 mL of a phenolphthalein solution of a concentration of 1%; adding 2 gm of magnesium oxide powder to the mixed solution after the step of adjusting; stirring the mixed solution 10 seconds after the step of adding; and obtaining the elapsed time obtaining the elapsed time from the step of adding to a time the mixed solution turns to pink.

2. The magnesium oxide powder according to Claim 1,
   wherein the $D_{50}$ is in a range of 3 $\mu$m or more and 10 $\mu$m or less.

3. The magnesium oxide powder according to Claim 1 or 2,
   wherein the $D_{90}$ is 50 $\mu$m or less.

4. The magnesium oxide powder according to any one of Claims 1 to 3,

wherein a BET specific surface area is 2.0 m$^2$/g or less.

5. The magnesium oxide powder according to any one of Claims 1 to 4,
   wherein a magnesium oxide content rate is 90% by mass or more.

6. The magnesium oxide powder according to any one of Claims 1 to 5,
   wherein the magnesium oxide powder is for a rubber vulcanization acceleration aid.

7. A vulcanizing agent composition for rubber, comprising:

   a vulcanizing agent;
   a rubber vulcanization accelerating agent; and
   the magnesium oxide powder according to Claim 6.

8. A rubber composition comprising:

   a rubber component;
   a rubber vulcanizing agent;
   a rubber vulcanization accelerating agent; and
   the magnesium oxide powder according to Claim 6.

9. A method for producing a magnesium oxide powder, the method comprising the steps of:

   producing magnesium oxide by firing a magnesium compound at a temperature of 1,200°C or higher and 2,500°C or lower; and
   obtaining a magnesium oxide powder having $D_{90}$ is 50 $\mu$m or less by carrying out any one or both of pulverization and classification of the magnesium oxide, $D_{90}$ being a particle size at which a cumulative size based on a volume-based cumulative particle size distribution curve by sieving test is 90%, wherein
   a BET specific surface area of the magnesium oxide powder is 2.0 m$^2$/g or less, and
   a citric acid activity of the magnesium oxide powder is in a range of 500 seconds or more and 2,500 seconds or less, the citric acid activity being an elapsed time measured by a citric acid activity measuring method including steps of: adjusting a temperature of a mixed solution to 30°C $\pm$ 0.5°C, the mixed solution containing 100 mL of a citric acid aqueous solution of a concentration of 0.13 mol/L, and 2 mL of a phenolphthalein solution of a concentration of 1%; adding 2 gm of magnesium oxide powder to the mixed solution after the step of adjusting; stirring the mixed solution 10 seconds after the step of adding; and obtaining the elapsed time obtaining the elapsed time from the step of adding to a time the mixed solution turns to pink.

## INTERNATIONAL SEARCH REPORT

| International application No. |
| --- |
| **PCT/JP2022/033919** |

**A.   CLASSIFICATION OF SUBJECT MATTER**

*C01F 5/08*(2006.01)i; *C08K 3/22*(2006.01)i; *C08L 21/00*(2006.01)i
FI:    C01F5/08; C08K3/22; C08L21/00

According to International Patent Classification (IPC) or to both national classification and IPC

**B.   FIELDS SEARCHED**

Minimum documentation searched (classification system followed by classification symbols)

C01F5/02-5/12; C08K3/22; C08L21/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580/JSTChina (JDreamIII)

**C.   DOCUMENTS CONSIDERED TO BE RELEVANT**

| Category* | Citation of document, with indication, where appropriate, of the relevant passages | Relevant to claim No. |
| --- | --- | --- |
| X | WO 2011/007638 A1 (SAKAI CHEMICAL INDUSTRY CO., LTD.) 20 January 2011 (2011-01-20) paragraphs [0011], [0016]-[0019], [0040]-[0042], examples 1-9 | 1-9 |
| Y | | 6 |
| X | WO 2011/040593 A1 (TATEHO CHEMICAL INDUSTRIES CO., LTD.) 07 April 2011 (2011-04-07) paragraphs [0018]-[0025], [0046], [0052]-[0056], table 1 | 1, 3, 5, 9 |
| Y | | 6 |
| X | WO 2012/043564 A1 (TATEHO CHEMICAL INDUSTRIES CO., LTD.) 05 April 2012 (2012-04-05) paragraphs [0051]-[0055], [0073], table 2 | 1, 3, 5 |
| A | LI, Xue et al., Advanced Powder Technology, 2016, vol. 27, pp. 1109-1114, https://doi.org/10.1016/j.apt.2016.03.020 Abstract, 1. Introduction, 3.3. Characterization of active MgO | 1-9 |
| A | KR 10-1639653 B1 (KIM, Ho Gyeong) 14 July 2016 (2016-07-14) | 1-9 |

☑ Further documents are listed in the continuation of Box C.          ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 November 2022** | **29 November 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2022/033919**

**C.    DOCUMENTS CONSIDERED TO BE RELEVANT**

| Category* | Citation of document, with indication, where appropriate, of the relevant passages | Relevant to claim No. |
|-----------|-----------------------------------------------------------------------------------|----------------------|
| A | US 4443425 A (CALGON CORP.) 17 April 1984 (1984-04-17) | 1-9 |
| A | WO 2009/038207 A1 (MITSUI MINING & SMELTING CO., LTD.) 26 March 2009 (2009-03-26)<br>        paragraph [0072] | 4 |

Form PCT/ISA/210 (second sheet) (January 2015)

**INTERNATIONAL SEARCH REPORT**
Information on patent family members

International application No.

**PCT/JP2022/033919**

| Patent document cited in search report | | | Publication date (day/month/year) | Patent family member(s) | | | Publication date (day/month/year) |
|---|---|---|---|---|---|---|---|
| WO | 2011/007638 | A1 | 20 January 2011 | EP 2455339 A1 paragraphs [0011], [0016]-[0019], [0040]-[0042], examples 1-9 | | | |
| | | | | CN | 102471082 | A | |
| | | | | KR | 10-2012-0049181 | A | |
| | | | | SG | 177616 | A | |
| | | | | TW | 201111282 | A | |
| | | | | JP | 2011-20870 | A | |
| WO | 2011/040593 | A1 | 07 April 2011 | US 2012/0189850 A1 paragraphs [0026]-[0033], [0056], [0061]-[0065], table 1 | | | |
| | | | | US | 2014/0134097 | A1 | |
| | | | | CN | 102712491 | A | |
| | | | | KR | 10-2012-0093176 | A | |
| | | | | TW | 201129506 | A | |
| | | | | JP | 2011-73951 | A | |
| WO | 2012/043564 | A1 | 05 April 2012 | CN | 103140446 | A | |
| | | | | KR | 10-2013-0081293 | A | |
| | | | | TW | 201219307 | A | |
| | | | | JP | 2012-72004 | A | |
| KR | 10-1639653 | B1 | 14 July 2016 | (Family: none) | | | |
| US | 4443425 | A | 17 April 1984 | (Family: none) | | | |
| WO | 2009/038207 | A1 | 26 March 2009 | CN | 101801568 | A | |
| | | | | KR | 10-2010-0071970 | A | |
| | | | | TW | 200932405 | A | |
| | | | | JP | 2009-74152 | A | |

Form PCT/ISA/210 (patent family annex) (January 2015)

**EP 4 410 744 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021157106 A
- JP 2019044137 A
- JP 2015052031 A